# EUROPEAN PATENT APPLICATION

(11) **EP 2 490 090 A1**
(43) Date of publication of application: **22.08.2012**
(21) Application number: 12156012.2
(22) Date of filing: 17.02.2012
(51) Int. Cl.: G05B 23/02

(54) **Wind turbine generator system fault processing method and system**

(30) Priority: 18.02.2011 CN 201110040901
(71) Applicant: Sinovel Wind Group Co., Ltd, Haidian District, Beijing 100872 (CN)
(72) Inventor: Liu, Zhenjie, 100872 Beijing (CN); Zhang, Xueyan, 100872 Beijing (CN)
(74) Representative: Körfer, Thomas

(57) **Abstract**

A wind turbine generator system fault processing method and a wind turbine generator system fault processing system are provided. The method comprises: receiving a detection signal sent by a detection element for detecting a running state of a part of a wind turbine generator system, and setting a fault bit corresponding to the part of the wind turbine generator system in a fault state or a non-fault state according to the detection signal; detecting whether the fault bit corresponding to the part of the wind turbine generator system is in the fault state; acquiring a fault control word corresponding to a fault bit of the fault state; and determining whether a part corresponding to the fault bit of the fault state has non-halting fault according to the fault control word, and if so, performing fault reset processing on the fault bit of the fault state. The system comprises a setting module, a detection module and a processing module, wherein the setting module, the detection module and the processing module are connected with each other; the setting module is used for receiving a detection signal sent by a detection element for detecting a running state of a part of the wind turbine generator system, and setting a fault bit corresponding to the part of the wind turbine generator system in a fault state or a non-fault state according to the detection signal; the detection module is used for detecting whether the fault bit corresponding to the part of the wind turbine generator system is in the fault state; and the processing module is used for acquiring a fault control word corresponding to a fault bit of the fault state, determining whether a part corresponding to the fault bit of the fault state has non-halting fault according to the fault control word, and if so, performing fault reset processing on the fault bit of the fault state.

## Description

### FIELD OF THE TECHNOLOGY

The present invention relates to an automatic control technology, in particular to a wind turbine generator system fault processing method and a wind turbine generator system fault processing system.

### BACKGROUND

A wind turbine generator system generally has many parts. In order to ensure safe operation of the wind turbine generator system and prolong the service life of equipment, generally fault detection processing is performed on each part.

The fault detection processing method for the wind turbine generator system in the prior art comprises the following steps of: deploying an equipment running control program in a fault processing system, wherein the equipment running control program is provided with a fault bit corresponding to the running fault of each part in the wind turbine generator system. In the running process of the wind turbine generator system, the fault processing system can acquire the running condition of each part of the wind turbine generator system by detecting the fault bit in real time. If any part(s) has fault, the fault processing system sends a control instruction to control the wind turbine generator system to immediately stop running and wait fault processing. After the fault is eliminated, the wind turbine generator system is restarted.

In the fault detection processing method for the wind turbine generator system, as long as the fault processing system detects the fault of the wind turbine generator system, the fault processing system controls the wind turbine generator system to halt, but halting is not needed in certain faults in fact, so the fault processing system certainly reduces the work efficiency of the wind turbine generator system.

### SUMMARY

The invention aims to provide a wind turbine generator system fault processing method and a wind turbine generator system fault processing system for solving the problem that the work efficiency of the wind turbine generator system is reduced in conventional wind turbine generator system fault detection processing.

In order to realize the aim, one aspect of the present invention provides a wind turbine generator system fault processing method, comprising: receiving a detection signal sent by a detection element for detecting a running state of a part of a wind turbine generator system, and setting a fault bit corresponding to the part of the wind turbine generator system in a fault state or a non-fault state according to the detection signal; detecting whether the fault bit corresponding to the part of the wind turbine generator system is in the fault state; acquiring a fault control word corresponding to a fault bit of the fault state; determining whether a part of the wind turbine generator system corresponding to the fault bit of the fault state has non-halting fault according to the fault control word, and if so, performing fault reset processing on the fault bit of the fault state.

On the other hand, the invention also provides a wind turbine generator system fault processing system, comprising a setting module, a detection module and a processing module, wherein the setting module, the detection module and the processing module are connected with each other; the setting module is used for receiving a detection signal sent by a detection element for detecting the running state of a part of a wind turbine generator system, and setting a fault bit corresponding to the part of the wind turbine generator system in a fault state or a non-fault state according to the detection signal; the detection module is used for detecting whether the fault bit corresponding to the part of the wind turbine generator system is in the fault state; and the processing module is used for acquiring a fault control word corresponding to a fault bit of the fault state, determining whether a part of the wind turbine generator system corresponding to the fault bit of the fault state has non-halting fault according to the fault control word, and if so, performing fault reset processing on the fault bit of the fault state.

According to the technical scheme, running state of the wind turbine generator system can be acquired for performing corresponding fault control by detecting the fault bit corresponding to the part of the wind turbine generator system and acquiring the fault control word corresponding to the fault bit; and fault reset processing is performed on the fault bit corresponding to a part having non-halting fault which is determined according to the fault control word, so that halting operation in the non-halting fault can be avoided, the halting frequency is reduced, and the work efficiency of the wind turbine generator system is improved.

### BRIEF DESCRIPTION OF THE DRAWINGS

In order to explain the technical solutions of the embodiments of the invention more clearly, the following drawings are provided, and detailed description of the technical solutions of the embodiments of the invention are given below referring to the drawings. Obviously, the drawings show certain embodiments of the invention, and persons skilled in this art can make modifications and variations of the drawings without creative work, and all of the modifications and variations are within the scope of the present invention.

Figure 1 is a flow chart of an embodiment I of a wind turbine generator system fault processing method of the present invention;

Figure 2 is a flow chart of an embodiment II of the wind turbine generator system fault processing method of the present invention;

Figure 3 is a flow chart of an embodiment III of the wind turbine generator system fault processing method of the present invention;

Figure 4 is a flow chart of an embodiment IV of the wind turbine generator system fault processing method of the present invention;

Figure 5 is a structural schematic figure of an embodiment I of a wind turbine generator system fault processing system of the present invention;

Figure 6 is a structural schematic figure of an embodiment II of the wind turbine generator system fault processing system of the present invention.

### DETAILED DESCRIPTION

In order to make the objects, technical solutions and merits of the present invention clearer, a further detailed description of embodiments of the present invention is given by reference to accompanying drawings. It is obvious that the described embodiments is one part of the embodiments of the invention and is not the whole embodiments. Base on the embodiments of the invention, those persons skilled in the art can obtain all other embodiments not under the premise that they should provide creative labor. These embodiments all are within the protection range of the invention.

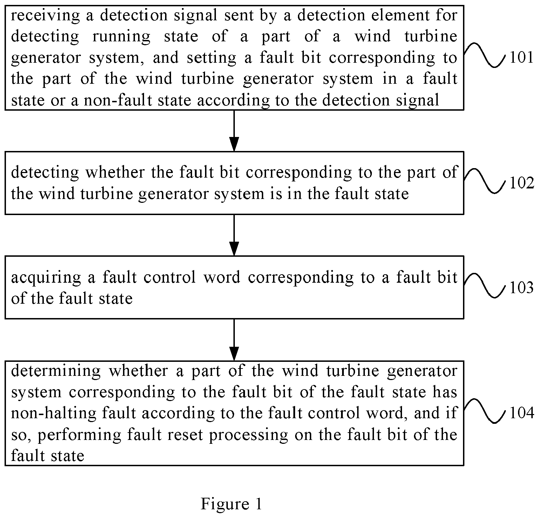

Figure 1 is a flow chart of an embodiment I of a wind turbine generator system fault processing method of the present invention. As shown in figure 1, the method of the embodiment I comprising:

Step 101, receiving a detection signal sent by a detection element for detecting running state of a part of a wind turbine generator system, and setting a fault bit corresponding to the part of the wind turbine generator system in a fault state or a non-fault state according to the detection signal;

Specifically, each part, which needs to be monitored, of the wind turbine generator system is provided with a detection element such as a sensor and the like for detecting the running state of the part, and the detection element can be a temperature sensor, a pressure sensor, a vibration sensor or the like. For example, a gear box is provided with the temperature sensor; and the temperature sensor is used for detecting the temperature of the gear box, converting the detected temperature into an electrical signal and sending the electrical signal to a wind turbine generator system fault processing system in a wired or wireless mode. The wind turbine generator system fault processing system can be a computer, for example; and a unit for running a control program is preset in the computer. After the unit for running the control program receives the electrical signal sent by the temperature sensor which is used for indicating the current temperature of the gear box, the current temperature of the gear box is compared with a preset temperature threshold value; if the current temperature of the gear box is higher than the preset temperature threshold value, the gear box has a fault; and if the current temperature of the gear box is not higher than the preset temperature threshold value, the gear box has no fault. The unit for running the control program sets state of the corresponding fault bit according to whether the gear box has a fault. Other parts can be similarly monitored.

Wherein, the fault bit of each part occupies one bit of the unit for running the control program, for example; when the part has no fault, the state of the corresponding fault bit is set as 0; and when the part has a fault, the state of the corresponding fault bit is set as 1. Moreover, after the state of the fault bit has been set as 1, the state can be reset as 0 by a fault bit resetting process. Hereinafter, the fault bit indicating that the corresponding part has no fault, e.g., the fault bit is set as 0, is named as a fault bit of a non-fault state; and the fault bit for indicating that the corresponding part has fault, e.g., the fault bit is set as 1, is named as a fault bit of a fault state. Wherein, the unit for running the control program can set the state of the fault bit by adopting conventional setting means.

Step 102, detecting whether the fault bit corresponding to the part of the wind turbine generator system is in the fault state;

In the step, whether the part of the wind turbine generator system corresponding to the fault bit has fault can be acquired in real time by detecting and scanning the fault bit. The wind turbine generator system fault processing system can detect the states of all fault bits according to the preset detecting and scanning period such as 1 second. When the detected fault bit is 1, the fault bit of the fault state is detected, further fault processing is performed according to the fault condition, and the fault condition comprises halting fault and non-halting fault and the like.

Step 103, acquiring a fault control word corresponding to a fault bit of the fault state;

In the step, based on the fault bit of the fault state detected in the step 102, the corresponding fault control word is queried, so that the wind turbine generator system fault processing system performs fault control processing according to the fault control word. Wherein, the fault control word corresponding to each fault bit is preset in the unit for running control program of the wind turbine generator system fault processing system, and the fault control word can be initially set by a technician according to the part corresponding to the fault bit. For example, the fault control word comprises fault priority information for indicating whether the fault is halting fault; for a key part such as a motor of the wind turbine generator system or the like, the fault priority in the corresponding fault control word is set as halting fault; and for certain non-key part, the fault priority in the corresponding fault control word is set as non-halting fault.

Step 104, determining whether a part of the wind turbine generator system corresponding to the fault bit of the fault state has non-halting fault according to the fault control word, and if so, performing fault reset processing on the fault bit of the fault state.

In the step, whether the part corresponding to the fault bit of the fault state has halting fault or non-halting fault is judged according to the fault control word corresponding to the fault bit of the fault state; and when the non-halting fault is determined, the wind turbine generator system does not need to be halted, and only fault reset processing is performed on the fault bit corresponding to the part. Wherein, the fault reset processing means to reset the fault bit of the fault state to a fault bit of a non-fault state, for example, the fault bit of the state 1 is reset to the state 0.

According to the fault processing method of the embodiment, whether the part has halting fault or non-halting fault can be judged according to the fault control word corresponding to the fault bit; and if the part has the non-halting fault, the wind turbine generator system does not need to be halted, and the fault bit corresponding to the part of the wind turbine generator system only needs to be reset, so that the fault bit can effectively reflect whether the part has fault in subsequent time. Therefore, under certain condition that the part has fault due to temporary factors, the fault bit can be reset to wait automatic elimination of the fault of the part, and halting is not needed. For example, if the temperature acquired by the temperature sensor in the gear box is higher than the preset threshold value due to over strong wind in certain time, the gear box has fault, and the state of the fault bit corresponding to the gear box is set as 1. When the fault of the gear box is preset as non-halting fault in the corresponding fault control word, it is not necessary to perform halting when the detected state of the fault bit corresponding to the gear box is 1, and reset the state of the fault bit to 0. In a period of later time, the temperature of the gear box is lower than the preset threshold value due to reduction of wind power, and then the fault can be automatically eliminated. Therefore, compared with the prior art in which halting is executed in any fault, the method has the advantages of reducing the halting frequency of the wind turbine generator system and then improving the work efficiency.

In the embodiment, the running state of the wind turbine generator system can be acquired for performing corresponding fault control by detecting the fault bit corresponding to the part of the wind turbine generator system and acquiring the fault control word corresponding to the fault bit; and fault reset processing is performed on the fault bit corresponding to the part having non-halting fault which is determined according to the fault control word, so that halting operation in the non-halting fault can be avoided, the halting frequency is reduced, and the work efficiency of the wind turbine generator system is improved.

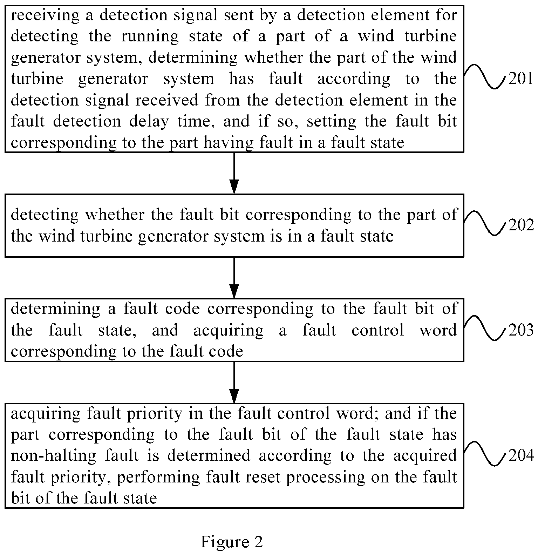

Figure 2 is a flow chart of an embodiment II of the wind turbine generator system fault processing method of the present invention. As shown in figure 2, based on the embodiment I as shown in figure 1, the fault control word can comprise fault code, fault detection delay time and fault priority. Correspondingly, the method of the embodiment comprises:

Step 201, receiving a detection signal sent by a detection element for detecting the running state of a part of a wind turbine generator system, determining whether the part of the wind turbine generator system has fault according to the detection signal received from the detection element in the fault detection delay time, and if so, setting the fault bit corresponding to the part having fault in a fault state.

Specifically, the fault detection delay time is used for judging whether the part really has fault before a fault is reported, namely before the state of the fault bit is set as 1. The detection signals sent by the detection element and received by the wind turbine generator system fault processing system may be error signals sent when the detection element is disturbed, and may also be error transmitted signals due to interference when the detection element sends the signals to the wind turbine generator system fault processing system; and if the fault of the part is judged according to a instantaneous signal, fault misinformation may be caused under the condition that the equipment has no fault. The fault detection is delayed for certain time before the fault is reported, so that the possibility of fault misinformation can be reduced.

For example, the wind turbine generator system fault processing system receives the signal reported by the temperature sensor arranged in the gear box in a certain moment t, the current temperature of the gear box exceeds the preset temperature threshold value is acquired by judgment according to the signal, and the fault detection delay time corresponding to the gear box is read. For example, the fault detection delay time corresponding to the gear box is m seconds; if the wind turbine generator system fault processing system can judge that the temperature of the gear box exceeds the preset temperature threshold value according to any received signal reported by the temperature sensor in the continuous m seconds from the moment t, the gear box has fault, and the state of the fault bit is set as 1; and if the wind turbine generator system fault processing system can judge that the temperature of the gear box does not exceed the preset temperature threshold value according to the signal reported by the temperature sensor at the nth second (wherein n is smaller than m) from the moment t, the gear box has no fault, and the state of the fault bit is kept as 0.

Specifically, different fault detection delay time can be set for different parts, for example, the delay time is set according to the emergency conditions of the faults of the parts, the relatively emergent fault can be set with short delay time or no delay, for example, the fault detection delay time is set as 1s; the relatively not emergent fault can be set with relatively long delay time, for example, the fault detection delay time is set as 10s, the fault of the corresponding part is determined when the part has fault can be judged according to the detection signals reported by the detection element in continuous 10 seconds, and the state of the corresponding fault bit is set as 1.

The fault detection delay time can be set in the fault control word. The steps of acquiring the fault detection delay time may comprising: when the part may have a fault is judged according to the detection signal reported by the detection element at a certain moment, indexing the corresponding fault control word according to a fault code corresponding to the fault bit of the part, and acquiring the corresponding fault detection delay time from the fault control word. The fault can be reported more accurately by delayed fault judgment, so that the fault processing system performs subsequent fault processing according to the reported fault.

Step 202, detecting whether the fault bit corresponding to the part of the wind turbine generator system is in a fault state.

Step 203, determining a fault code corresponding to the fault bit of the fault state, and acquiring a fault control word corresponding to the fault code.

In the step, the fault control word corresponding to the fault bit can be found according to the mapping relationship between the fault code in the fault control word and the fault bit. Wherein, the fault bit corresponds to the fault code, for example, the wind turbine generator system has 256 parts, 16 words (each word accounts for 16 bits), i.e. 256 bits, are respectively used as fault bits corresponding to the parts, the fault code corresponding to the fault bit positioned at the 1st bit of the 1st word is 001, and the fault code corresponding to the fault bit positioned at the 1st bit of the 2nd word is 017, for example. Moreover, each fault control word has a unique corresponding fault code, and the fault code can be used as an index for searching the fault control word.

Step 204, acquiring fault priority in the fault control word; and if the part corresponding to the fault bit of the fault state has non-halting fault is determined according to the acquired fault priority, performing fault reset processing on the fault bit of the fault state.

Specifically, the fault priority is used for determining that whether the part has non-halting fault or halting fault. The fault priority is arranged in the fault control word, different faults correspond to different fault priorities, and the fault priorities can be divided into immediate halting fault, delay halting fault and non-halting fault according to the emergency degree of the faults. When a certain part in the wind turbine generator system has a fault of high priority, halting can be immediately performed; and when the fault of low priority happens, halting can be delayed or reset processing is waited without halting, so that the equipment can continuously run, and unnecessary halting is avoided.

Related parameters in the fault control word of the embodiment can be initialized during resetting of the fault processing system.

In the embodiment, on the basis of achieving the technical effects of the embodiment I, fault misinformation can be avoided by setting the fault detection delay time in the fault control word and determining whether the part has fault according to the fault detection delay time, so that the accuracy of fault report is improved; and unnecessary halting can be avoided by setting the fault priority in the fault control word and performing fault reset processing on the part when the non-halting fault of the part is determined according to the fault priority.

Based on the embodiment as shown in figure 1 or figure 2, fault reset type, fault self-reset time interval and fault self-reset number can be set in the fault control word, and are respectively used for judging that whether the fault is non-self-reset fault or self-reset fault, setting different reset time intervals in different faults and limiting the reset number in certain time.

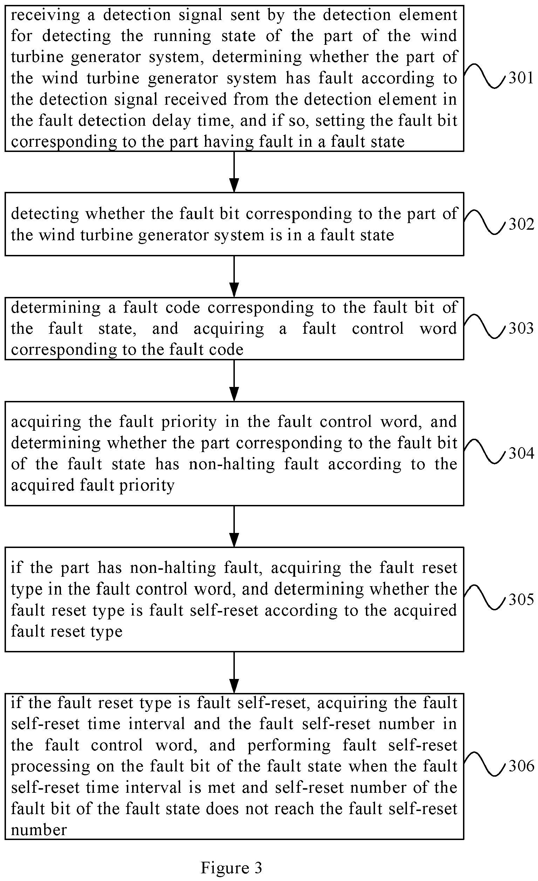

Figure 3 is a flow chart of an embodiment III of the wind turbine generator system fault processing method of the invention. As shown in figure 3, based on the embodiment II of the figure 2, the step 204 is detailed, and the method of the embodiment comprises the following steps of:

Step 301, receiving a detection signal sent by the detection element for detecting the running state of the part of the wind turbine generator system, determining whether the part of the wind turbine generator system has fault according to the detection signal received from the detection element in the fault detection delay time, and if so, setting the fault bit corresponding to the part having fault in a fault state.

Step 302, detecting whether the fault bit corresponding to the part of the wind turbine generator system is in a fault state.

Step 303, determining a fault code corresponding to the fault bit of the fault state, and acquiring a fault control word corresponding to the fault code.

Step 304, acquiring the fault priority in the fault control word, and determining whether the part corresponding to the fault bit of the fault state has non-halting fault according to the acquired fault priority.

Step 305, if the part has non-halting fault, acquiring the fault reset type in the fault control word, and determining whether the fault reset type is fault self-reset according to the acquired fault reset type.

Specifically, according to the self-recovery degree of the fault in certain time, the fault reset type can comprises fault non-self-reset and fault self-reset, wherein the fault non-self-reset is used for artificial processing of the fault, and the fault self-reset is completed by controlling the corresponding fault bit through the wind turbine generator system fault processing system. The fault reset type for distinguishing fault reset is set in the fault control word, so that subsequent fault self-reset processing is facilitated, and human intervention is reduced.

Step 306, if the fault reset type is fault self-reset, acquiring the fault self-reset time interval and the fault self-reset number in the fault control word, and performing fault self-reset processing on the fault bit of the fault state when the fault self-reset time interval is met and self-reset number of the fault bit of the fault state does not reach the fault self-reset number.

In the step, the fault self-reset time interval is used for determining the time required from fault report to fault reset; and when the system judges that the fault reset time is satisfied, fault self-reset processing can be started. Specifically, a central processing unit (CPU) is started for timing when detecting that the fault bit is 1, and fault self-reset processing is started when the timing time of the CPU reaches the time length of the fault self-reset time interval. Different fault self-reset time intervals can be set according to the faults of different types; for the fault capable of being immediately reset, short reset time interval can be set, for example, if the detecting and scanning period of the fault bit is 1s and the fault self-reset time interval is set as 1s, fault self-reset processing is performed on the corresponding fault bit in the next detecting and scanning period after the fault bit of the fault state is detected; for certain faults capable of being automatically eliminated in long time, relatively long reset time interval needs to be set, for example, if the detecting and scanning period of the fault bit is 1s and the fault self-reset time interval is set as 5s, fault self-reset processing is performed on the corresponding fault bit in the 5th detecting and scanning period after the fault bit of the fault state is detected. In the embodiment, it is explained by setting fault self-reset time intervals of two different time lengths as examples, and the fault self-reset time intervals of one or more than two time lengths can be set as required. Each fault control word corresponds to a fault self-reset time interval. By setting different fault self-reset time intervals, the faults capable of being automatically eliminated for long time can have long fault reset waiting time, so that unnecessary reset operation before the reset time arrived is avoided, and the work efficiency of the system is improved.

Meanwhile, the fault self-reset number of the part is limited in the step; when judging whether the fault self-reset time interval is met, also judging whether the fault self-reset number of the part is used up, and if so, fault self-reset cannot be performed, and artificial control processing is needed. In specific application, multiple fault self-reset numbers can be set according to the conditions. The step of judging whether the fault self-reset number of the part is used up can be realized as follows: subtracting the fault self-reset number in the fault control word by 1 after each time the fault bit is reset, and judging that whether the fault self-reset number of the part is used up according to detecting whether the fault self-reset number in the fault control word is 0. Moreover, the reset number of the fault bit can be recorded through a counter, and whether the fault reset number of the part is used up can be learnt by judging whether the numerical value of the counter is smaller than the fault self-reset number in the fault control word. In practice, after certain faults happen for certain times, the faults must be processed artificiality, and the system cannot reset the faults; and if the self-reset number is not limited, the hidden danger of serious faults of the wind turbine generator system is increased. By setting the fault reset number to limit the number of fault reset, the potential safety hazard of the equipment can be eliminated, and safe operation of the wind turbine generator system is ensured.

In the embodiment, on the basis of achieving the technical effects of the embodiment II, by determining whether the reset type is fault self-reset according to the fault reset type in the fault control word, subsequent fault self-reset processing is facilitated, and human intervention is reduced; by setting different fault self-reset time intervals in different fault control words to meet different fault reset waiting time requirements, certain unnecessary operations can be avoided, and the work efficiency of the fault processing system is improved; and by setting the fault self-reset number in the fault control word to limit the times of fault self-reset, the potential safety hazard of the equipment can be eliminated, and safe operation of the wind turbine generator system is ensured.

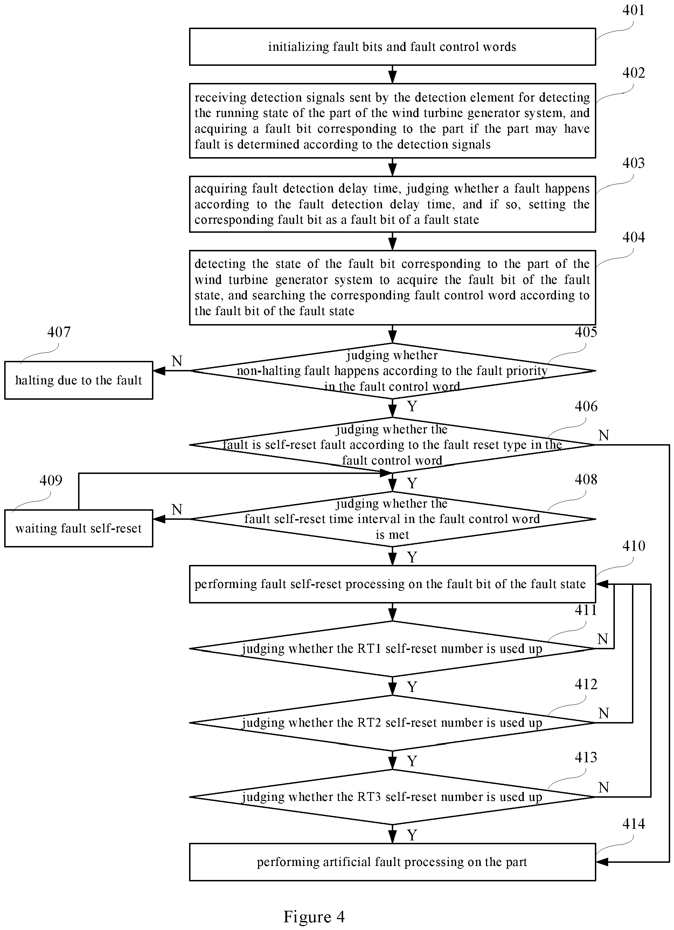

Figure 4 is a flow chart of an embodiment IV of the wind turbine generator system fault processing method of the present invention. As shown in figure 4, based on the embodiment of the figure 3, the fault self-reset number in the step 306 is detailed in the embodiment; and the fault self-reset number comprises RT1 self-reset number, RT2 self-reset number and RT3 self-reset number respectively corresponding to three time scales, namely first time RT1, second time RT2 and third time RT3. The RT1 self-reset number, the RT2 self-reset number and the RT3 self-reset number sequentially correspond to the fault self-reset number in the first time RT1, the second time RT2 and the third time RT3, and RT2 is greater than RT1 and smaller than RT3. Wherein, if the first time RT1 is 1 minute, the RT1 fault self-reset number is permitted fault self-reset number in 1 minute, for example, 10 times; if the second time RT2 is 1 hour, the RT2 fault self-reset number is permitted fault self-reset number in 1 hour, for example, 50 times; and if the third time RT3 is 1 day, the RT3 fault self-reset number is permitted fault self-reset number in 1 day, for example, 200 times. Meanwhile, other steps are correspondingly detailed. Shown as figure 4, the method of the embodiment comprising:

Step 401, initializing fault bits and fault control words.

Step 402, receiving detection signals sent by the detection element for detecting the running state of the part of the wind turbine generator system, and acquiring a fault bit corresponding to the part if the part may have fault is determined according to the detection signals.

Step 403, acquiring fault detection delay time, judging whether a fault happens according to the fault detection delay time, and if so, setting the corresponding fault bit as a fault bit of a fault state;

Step 404, detecting the state of the fault bit corresponding to the part of the wind turbine generator system to acquire the fault bit of the fault state, and searching the corresponding fault control word according to the fault bit of the fault state. The method of the embodiment III or other method can be adopted in the method of searching the fault control word.

Step 405, judging whether non-halting fault happens according to the fault priority in the fault control word, and if so, executing the step 406, otherwise, executing the step 407;

Step 406, judging whether the fault is self-reset fault according to the fault reset type in the fault control word, and if so, executing the step 408, otherwise, executing the step 414;

Step 407, halting due to the fault;

Step 408, judging whether the fault self-reset time interval in the fault control word is met, and if so, executing the step 410, otherwise, executing the step 409;

Step 409, waiting fault self-reset, and simultaneously executing the step 408 to perform further time interval judgment;

Step 410, performing fault self-reset processing on the fault bit of the fault state;

Step 411, judging whether the RT1 self-reset number is used up, and if so, executing the step 412, otherwise, executing the step 410;

Step 412, judging whether the RT2 self-reset number is used up, and if so, executing the step 413, otherwise, executing the step 410;

Step 413, judging whether the RT3 self-reset number is used up, and if so, executing the step 414, otherwise, executing the step 410;

And, step 414, performing artificial fault processing on the part.

The fault control word in a random embodiment can be determined according to the type of each parameter, the bit occupied by each parameter and specific fault number, and is not limited by the embodiments of the invention. The structure of the fault control word is shown as Table 1.

**Table 1: structure of a fault control word**

| fault control word | | | | | | | |
|---|---|---|---|---|---|---|---|
| fault code | fault detection delay time | fault priority | fault reset type | fault self-reset time interval | RT1 self-reset number | RT2 self-reset number | RT3 self-reset |

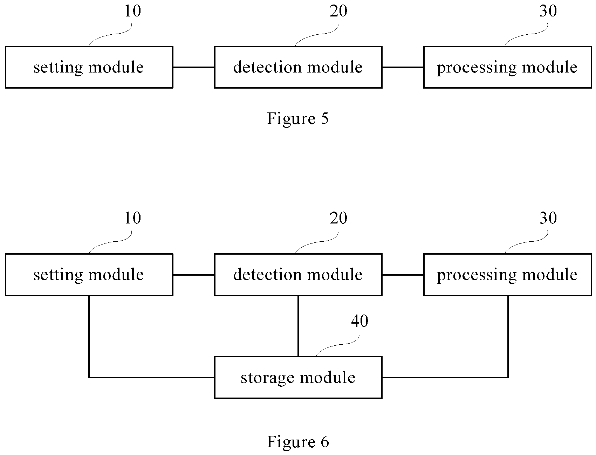

Figure 5 is a structural schematic figure of an embodiment I of a wind turbine generator system fault processing system of the present invention. As shown in figure 5, the system of the embodiment comprises a setting module 10, a detection module 20 and a processing module 30, wherein the setting module 10, the detection module 20 and the processing module 30 are connected with each other; the setting module 10 is used for receiving a detection signal sent by a detection element for detecting the running state of a part of the wind turbine generator system, and setting a fault bit corresponding to the part of the wind turbine generator system in a fault state or a non-fault state according to the detection signal; the detection module 20 is used for detecting whether the fault bit corresponding to the part of the wind turbine generator system is in the fault state; and the processing module 30 is used for acquiring a fault control word corresponding to a fault bit of the fault state, determining whether a part of the wind turbine generator system corresponding to the fault bit of the fault state has non-halting fault according to the fault control word, and if so, performing fault reset processing on the fault bit of the fault state.

The setting module 10, the detection module 20 and the processing module 30 in the embodiment are realized through a processor.

The embodiment can be used for executing the technical scheme of the embodiment I of the method, and the working principle and the achieved technical effects of the embodiment are similar to those of the embodiment I and are not repeated.

Figure 6 is a structural schematic figure of an embodiment II of the wind turbine generator system fault processing system of the present invention. As shown in figure 6, based on the embodiment of the figure 5, the system of the embodiment further comprises a storage module 40 connected with the setting module 10, the detection module 20 and the processing module 30 respectively, wherein the storage module 40 is used for storing the fault control word read in the fault processing process of the system, and the fault control word comprises fault code, fault detection delay time, fault priority, fault reset type, fault self-reset time interval and fault self-reset number, wherein the fault self-reset number comprises first self-reset number, second self-reset number and third self-reset number. The processing module is specifically used for determining whether the part has fault according to the fault detection delay time, and if so, setting the fault bit corresponding to the part of a fault in the fault state; determining whether the part corresponding to the fault bit of the fault state has non-halting fault according to the fault priority in the fault control word corresponding to the fault bit of the fault state; and if the part has non-halting fault, when the fault reset type in the fault control word corresponding to the fault bit of the fault state is fault self-reset and the fault self-reset time interval in the fault control word is met, and if the determined fault reset number of the fault bit of the fault state does not reach the fault self-reset number, performing fault self-reset processing on the fault bit of the fault state.

The storage module in the embodiment can be various media such as a read only memory (ROM), a random access memory (RAM), a disk or an optical disk and the like capable of storing program codes.

The embodiment can execute the technical scheme of the embodiment II or the embodiment III of the method, and the technical principle and the achieved technical effects of the embodiment are similar to those of the embodiment I and are not repeated.

The common technicians of the field can understand that: all or partial steps for implementing the embodiments of the method can be completed through program instruction related hardware, the program can be stored in computer readable storage media, and the steps of the embodiments of the method are executed when the program is executed; and the storage media comprise various media such as an ROM, an RAM, a disk or an optical disk and the like capable of storing program codes.

Finally, it should be noted that: the above embodiments are merely descriptive, not limitative, to the technical proposal of the present invention; although detailed description has been made to the present invention with reference to the aforementioned embodiments, it shall be understood by those ordinary skilled in this art that: modifications can be made to the technical proposals in various aforementioned embodiments or equivalent alternatives can be carried out on partial technical characteristics therein; and these modifications or alternatives will not make the corresponding technical proposals depart from the spirit and scope of the technical proposals of various embodiments of the present invention.

## Claims

1. A wind turbine generator system fault processing method, comprising:
receiving a detection signal sent by a detection element for detecting a running state of a part of a wind turbine generator system, and setting a fault bit corresponding to the part of the wind turbine generator system in a fault state or a non-fault state according to the detection signal;
detecting whether the fault bit corresponding to the part of the wind turbine generator system is in the fault state; acquiring a fault control word corresponding to a fault bit of the fault state; and
determining whether a part corresponding to the fault bit of the fault state has non-halting fault according to the fault control word, and if so, performing fault reset processing on the fault bit of the fault state.

2. The method according to the claim 1 **characterized in that**: the step of acquiring the fault control word corresponding to a fault bit of the fault state, specifically comprising: determining a fault code corresponding to the fault bit of the fault state, and acquiring the fault control word corresponding to the fault code.

3. The method according to the claim 1 **characterized in that**: the fault control word comprises fault priority; and the step of determining whether a part corresponding to the fault bit of the fault state has non-halting fault according to the fault control word specifically comprises the following steps of: determining whether the part corresponding to the fault bit of the fault state has non-halting fault according to the fault priority in the fault control word, and if so, performing fault reset processing on the fault bit of the fault state.

4. The method according to the claim 1 **characterized in that**: the fault control word comprises fault reset type; and the step of performing fault reset processing on the fault bit of the fault state specifically comprises the following steps of: detecting whether the fault reset type in the fault control word is fault self-reset, and if so, performing fault self-reset processing on the fault bit of the fault state.

5. The method according to the claim 4 **characterized in that**: the fault control word also comprises fault self-reset time interval and fault self-reset number; and the step of performing fault self-reset processing on the fault bit of the fault state specifically comprises the following steps of: when the fault self-reset time interval is met, if a self-reset number of the fault bit of the fault state does not reach the fault self-reset number in the fault control word, performing fault self-reset processing on the fault bit of the fault state.

6. The method according to the claim 5 **characterized in that**: the fault self-reset number comprises a first self-reset number, a second self-reset number and a third self-reset number; the first self-reset number, the second self-reset number and the third self-reset number sequentially correspond to the fault self-reset number in a first time, a second time and a third time; the first time is shorter than the second time, and the second time is shorter than the third time; and the step of performing fault self-reset processing on the fault bit of the fault state if a self-reset number of the fault bit of the fault state does not reach the fault self-reset number in the fault control word specifically comprises the following steps of: performing fault self-reset processing on the fault bit of the fault state if the self-reset number of the fault bit of the fault state does not reach the first self-reset number, otherwise, performing fault self-reset processing on the fault bit of the fault state if the self-reset number of the fault bit of the fault state does not reach the second self-reset number, and otherwise, performing fault self-reset processing on the fault bit of the fault state if the self-reset number of the fault bit of the fault state does not reach the third self-reset number.

7. The method according to any one of the claims 1 to 6 **characterized in that**: the fault control word also comprises fault detection delay time; and the step of setting a fault bit corresponding to the part of the wind turbine generator system in the fault state or the non-fault state according to the detection signal comprises the steps of: determining whether the part of the wind turbine generator system has a fault according to the detection signal received by the detection element in the fault detection delay time, and if so, setting a fault bit corresponding to the part having a fault as the fault state.

8. A wind turbine generator system fault processing system **characterized by** comprising a setting module, a detection module and a processing module, wherein the setting module, the detection module and the processing module are connected with each other; the setting module is used for receiving a detection signal sent by a detection element for detecting a running state of a part of the wind turbine generator system, and setting a fault bit corresponding to the part of the wind turbine generator system in a fault state or a non-fault state according to the detection signal; the detection module is used for detecting whether the fault bit corresponding to the part of the wind turbine generator system is in the fault state; and the processing module is used for acquiring a fault control word corresponding to a fault bit of the fault state, determining whether a part corresponding to the fault bit of the fault state has non-halting fault according to the fault control word, and if so, performing fault reset processing on the fault bit of the fault state.

9. The system according to the claim 8 **characterized by** also comprising a storage module connected with the setting module, the detection module and the processing module respectively, wherein the storage module is used for storing the fault control word, and the fault control word comprises fault code, fault detection delay time and fault priority; and the processing module is specifically used for determining whether the part of the wind turbine generator system has fault according to the detection signal received from the detection element in the fault detection delay time, if so, setting the fault bit corresponding to the part having fault as the fault state, determining a part corresponding to a fault bit of the fault state is in the non-halting state according to the fault priority, and if so, performing fault self-reset processing on the fault bit of the fault state.

10. The system according to the claim 8 or 9 **characterized in that**: the fault control word comprises fault reset type, fault self-reset time interval and fault self-reset number; and the processing module is also used for performing fault self-reset processing on the fault bit of the fault state if the detected fault reset type is fault self-reset, when the fault self-reset time interval is met and if a self-reset time of the fault bit of the fault state does not reach the fault self-reset number.
